# EUROPÄISCHE PATENTSCHRIFT

(11) **EP 1 704 369 B1**
(45) Veröffentlichungstag und Bekanntmachung des Hinweises auf die Patenterteilung: **04.07.2018**
(21) Anmeldenummer: 05706861.1
(22) Anmeldetag: 11.01.2005
(51) Int. Cl.: F23K 3/02, B65G 53/46, C21B 5/00

(54) **ZELLENRADSCHLEUSE**
CELLULAR WHEEL SLUICE
VANNE A ROUE CELLULAIRE

(30) Priorität: 13.01.2004 DE 102004001965
(43) Veröffentlichungstag der Anmeldung: 27.09.2006
(73) Patentinhaber: Schenck Process Europe GmbH, 64293 Darmstadt (DE)
(72) Erfinder: FABER, Harald, 68519 Viernheim (DE); KOHLMÜLLER, Klaus, 27726 Worpswede (DE); WEINAND, Robert, 68283 Darmstadt (DE)
(86) Internationale Anmeldenummer: PCT/EP2005/000181
(87) Internationale Veröffentlichungsnummer: WO 2005/068910

(56) Entgegenhaltungen:
- EP-A- 0 505 707
- EP-A- 1 110 885
- EP-A1- 0 285 811
- DE-A1- 3 401 774
- DE-A1- 10 119 306
- DE-A1- 19 901 967
- DE-U- 1 869 987
- DE-U1- 20 108 844
- US-A- 5 114 053
- US-A- 5 324 143
- US-A1- 2003 231 933

## Beschreibung

Die Erfindung betrifft eine Zellenradschleuse, insbesondere für Sekundärbrennstoffe, gemäß dem Oberbegriff des Patentanspruchs 1.

Zunehmend werden in industriellen Herstellungsverfahren Recyclingprodukte zur Wärmeerzeugung eingesetzt. Insbesondere zur Herstellung von Zement- und anderen Keramikprodukten werden als sogenannten Sekundärbrennstoffe neben den Primärbrennstoffen wie Kohlenstaub und dergleichen auch staubförmige, granulierte, pelletierte, flockige und faserige Sekundärbrennstoffe in den Drehrohröfen verfeuert. Diese Sekundärbrennstoffe werden aus recycelten Müll- oder Abfallstoffen hergestellt, indem diese zerkleinert und nach Stoffgruppen sortiert zur thermischen Verwertung abgegeben werden. Dabei handelt es sich beispielsweise um Plastikschredder, Farbstäube, Teppichbodenfasern, Tiermehl oder andere Brennstoffe, aus Müll oder aus Produktionsreststoffen. In der Zementindustrie werden bei einigen Öfen schon mehr als die Hälfte des Brennstoffbedarfs durch Sekundärbrennstoffe zugesetzt, die wegen der geringen Kosten immer mehr an Bedeutung gewinnen. Diese werden meist über Dosiervorrichtungen in pneumatische Förderleitungen eingegeben und dem Brennprozess zugeführt. Zum Eingeben in die pneumatische Förderleitung haben sich in der Praxis Zellenradschleusen bewährt, durch die eine volumetrische Dosierung unter pneumatischer Abdichtung zur Brennstoffzuführung möglich ist.

Eine derartige Brennstoffdosierung mit einer Zellenradschleuse ist aus der DE 200 06 800 U1 bekannt. Dabei ist zur Brennstoffdosierung eine Durchblaszellenradschleuse vorgesehen, bei der die Zellenradschleusenachse in Richtung des Hauptförderstromes verläuft. Vor der Zellenradschleuse ist ein Gebläse angeordnet, durch das die Sekundärbrennstoffe aus der Zellenradschleusenkammer in die Förderleitung zum Ofen ausgeblasen werden. Bei derartigen Durchblaszellenradschleusen tritt oft das Problem auf, dass die eingeblasene Luft, die unter einem gewissen Druck der Lufterzeugung steht, beim Weiterdrehen des Zellenrades als sogenannte Schöpfluft zur Materialzufuhr gelangt und dort dem Materialfluss entgegengerichtet austritt, wodurch dieser behindert wird. Gleichzeitig entstehen über die Spalte zwischen den Zellenradstegen und den Zellenradgehäusewänden Leckluftströme, die gleichzeitig auch Materialanteile über die Spalte in den Einfüllschacht zurückblasen. Dies macht eine Brennstoffdosiereinrichtung mit einer derartigen Durchblaszellenradschleuse häufig uneffektiv und auch ungenau, da es aus diesem Grund zu einer pulsierenden Beschickung kommen kann und damit Dosiergenauigkeitsschwankungen entstehen. Oftmals kommt es dabei auch zu einer nicht völligen Entleerung der Dosierkammern. Um dies zu verhindern, wird dann mehr Luft in die Zellenradkammer eingeblasen, wodurch die Reaktion im Ofen gestört und uneffektiv werden kann.

Zur Verhinderung eines derartigen Schöpfluft- und Leckluftan-teils ist aus der DE 101 17 187 C1 eine Zellenradschleuse zur Sekundärbrennstoffdosierung bekannt, die ebenfalls als Durch-blaszellenradschleuse ausgebildet ist. Dabei ist ein Zellenrad mit verhältnismäßig großem Innenkern vorgesehen, durch den nur im äußeren Bereich der radial abstehenden Stege trapezförmige Dosierkammern entstehen. Diese Dosierkammern werden mit einem Einlass- und einem Auslassrohr verbunden, dessen Querschnitt etwa der Größe der Dosierkammern entspricht. Dabei ist insbesondere zur Verminderung des Schöpfluftanteils die Auslassöffnung gegenüber der Einlassöffnung verbreitert, so dass beim Weiterdrehen des Zellenrades die Einlassöffnung bereits geschlossen ist, während die Auslassöffnung zumindest noch an den Verbreiterungsstellen einen Öffnungsspalt aufweist. Dadurch soll ein Unterdruck entstehen, der den Luftanteil bei geschlossener Einlassöffnung aus der Dosierkammer heraussaugt, so dass der Schöpfluftanteil verringert wird. Gleichzeitig weist diese Zellenradschleuse an den Enden der Dosierstege Dichtlippen zum Gehäuse auf, die den Leckluftspalt verschließen sollen, so dass eine kontinuierliche Dosierung und verbesserte Kammerentleerung durch die Reduzierung der Leckluftanteile erreichbar ist. Derartige Dichtlippen, die am Gehäuse anliegen, werden in der Regel aus weichen, gummiartigen Dichtmaterialien hergestellt, die den Spalt abdichten, aber trotzdem die Gehäusewandungen nicht beschädigen oder verschließen. Da aber Sekundärbrennstöffe häufig abrasive Staubbestandteile, Faserreste oder metallische Draht- oder Stiftrückstände enthalten, sind die Standzeiten derartiger Dichtlippen verhältnismäßig kurz und erfordern deshalb häufiger Instandhaltungsarbeiten.

Die DE 199 01 967 A offenbart ebenfalls eine Zellradschleuse, die als Durchblasschleuse ausgebildet ist und bei der die Einblas- und Ausblasöffnungen unterhalb der Zellenradachse im Rotationsbereich der Zellenradstege einander gegenüberliegend im Gehäuse vorgesehen sind. Eine solche Zellenradschleuse ist auch aus der EP 0 285 811 A1 bekannt, wobei hier als Einblasöffnung in der Stirnseite des Gehäuses Düsenöffnungen mit zylindrischem oder konischem Querschnitt angeordnet sind.

Weiterhin sind zur Vermeidung von Leckluftströmen aus der EP 0 505 707 A1 Zellenradschleusen mit Zellradstegen bekannt, die über eine bestimmte Länge eine Stregverbreiterung in Form von dreiecksflrmigen profilierten Stahlprofilen aufweisen. Zum gleichen Zweck sind bei einer aus der EP 1 110 885 A2 bekannten Zellenradschleuse die Zellenradstege mit Teilprofilen verschweißt, wobei die Profilschenkel aus einem Metallmaterial bestehen können, so dass Hauptkammern und zusätzlich Y-förmige Nebenkammern gebildet werden, die ein ungehindertes Abströmen der Leckluft behindern. Letztlich ist aus der US 5 324 143 A eine Zellradschleuse mit Zellradstegen aus Aluminium bekannt, die an ihren Spitzen zur Erhöhung der Standzeit mit Stahlkanten versehen sind. Der Erfindung liegt deshalb die Aufgabe zugrunde, eine Zellenradschleuse insbesondere für die Sekundärbrennstoffdosierung der eingangs genannten Art derart weiterzuentwickeln, dass bei hoher Dosiergenauigkeit die Verschleißteile der Zellenradschleuse hohe Standzeiten aufweisen und damit wenig störungsanfällig sind.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, dass durch die integrierte Injektordüse am Anfang der Ausblaskammer eine verhältnismäßig hohe Einblasgeschwindigkeit in dieser Kammer wirksam wird, die ein vollständige Kammerentleerung gewährleistet und nur eine geringe Druckbelastung an den Zellenradspalten erzeugt. Dadurch wird der Leckluftanteil entlang der ausblasbaren Dosierkammer um bis zu 70% verringert, so dass vorteilhafterweise eine genaue und gleichmäßige Dosierung der verschiedensten Sekundärbrennstoffe möglich ist. Die geringe Druckbelastung an den Zellenradspalten der Durchblaskammer ermöglicht gleichzeitig einen Einsatz von verschleißfesten metallischen sogenannten harten Stegabdichtungen, die insbesondere bei unterschiedlichen auch abrasiven Sekundärbrennstoffen vorteilhafterweise sehr hohe Standzeiten der Verschleißteile gewährleisten. Dadurch sind gleichzeitig abscherende Zellenradstegkanten möglich, die vorteilhaft ein Zusetzen und Abnutzen der Zellenradschleuse entlang der rotierenden Zellenradkammerspalte verhindern und damit einen störungsfreien Betrieb gewährleisten.

Die Erfindung hat weiterhin den Vorteil, dass durch die Injektordüse die Förderleitungsquerschnitte weitgehend unabhängig von dem Dosierkammervolumen sind, da durch die höhere Einblasgeschwindigkeit auch großvolumige Dosierkammern vollständig entleert werden können, ohne dass nennenswerte Leckluft in Kauf genommen werden muss. Damit ist vorteilhafterweise auch praktisch jeder aufgearbeitete brennbare Müll durch dieselbe Zellenradschleuse dosierbar, ohne dass die Förderrohrquerschnitte oder die Gebläseleistung daran angepasst werden müssten. Dadurch sind auch gleichzeitig hohe Gegendrücke hinnehmbar, ohne weiche Spaltabdichtungen einsetzen zu müssen, so dass bei gleichbleibender Dosiergenauigkeit auch harte verschleißfeste Spaltabdichtmittel vorteilhaft verwandt werden können.

Durch den Einsatz der integrierten Injektordüse können vorteilhafterweise auch hohe Befüllungsgrade in den Dosierkammern von mindestens 30% zum Ofen gefördert werden, wodurch ein effektives Luft-Brennstoff-Verhältnis einhaltbar ist, da zu einer möglichst rückstandfreien umweltverträglichen Verbrennung führt.

Die Erfindung hat weiterhin den Vorteil, dass durch die Einsatzmöglichkeit der harten bzw. verschleißfesten metallischen Spaltabdichtungen auch eine hohe Temperaturbeständigkeit erreichbar ist, durch die eine hohe Flammendurchschlag- und Druckstoßsicherheit gewährleistet ist.

Die Erfindung wird anhand eines Ausführungsbeispiels, das in der Zeichnung dargestellt ist, näher erläutert. Es zeigen:
- Fig. 1:: die Seitenansicht als schematische Schnittdarstellung durch die axiale Mittenebene einer Zellenradschleuse;
- Fig. 2:: die Vorderansicht als schematische Schnittdarstellung durch die Querschnittebene einer Zellenradschleuse, und
- Fig. 3:: eine Schnittdarstellung durch den Vorderteil der Injektordüse.

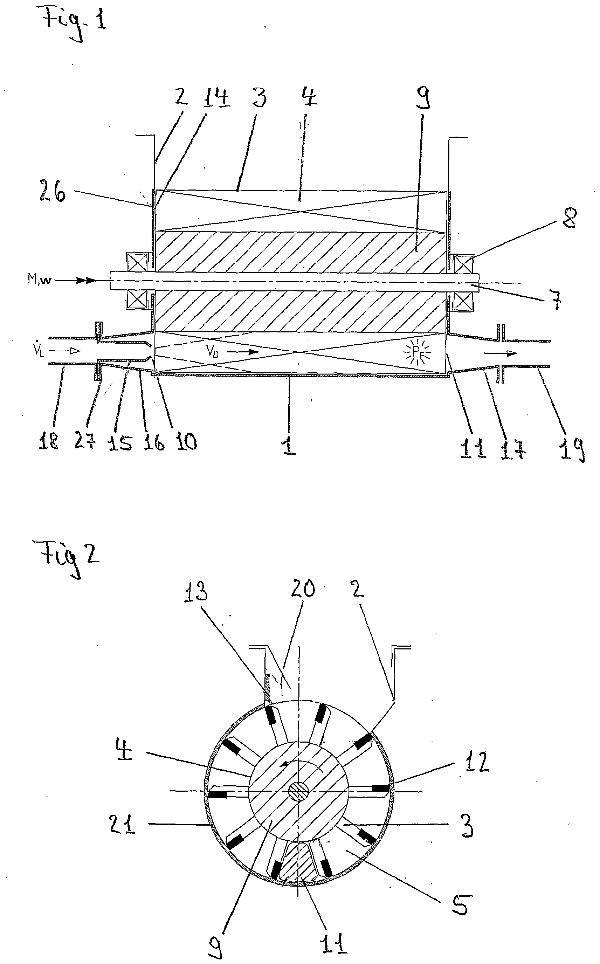

In Fig. 1 der Zeichnung ist eine Zellenradschleuse zur Sekundärbrennstoffdosierung schematisch dargestellt, die als Durchblasschleuse mit harten Spaltabdichtungen 12 ausgebildet ist und in einer Einblasöffnung 10 der Gebläseleitung 18 eine integrierte Injektordüse 15 aufweist.

Die Zellenradschleuse besteht aus einem zylinderförmigen Gehäuseteil 1, auf dem ein nach oben offener Zuführschacht 2 angeordnet ist. In dem Zuführschacht 2 werden die herangeführten Sekundärbrennstoffe zur Dosierung eingegeben. Die Sekundärbrennstoffe können aus einem Silo oder einer Dosierbandwaage in den Zuführschacht 2 schwerkraftmäßig eingegeben werden. Als Sekundärbrennstoffe werden heute aufbereitete Reststoffe aus Müll- oder Produktionsrückständen verwandt, die brennfähig sind. Diese werden zu Folien-, Faserschnipseln oder Pellets verarbeitet, die Kantenlängen von ca. 10 bis 50 mm aufweisen und noch kleinere körnige oder staubförmige Anteile enthalten.

Aus Produktionsrückständen sind aber auch reine staub- und körnige Rückstände aus Tiermehl, Futtermitteln, Holzhackschnitzeln, Altholzschnitzel und Sägemehl als Sekundärbrennstoffe verwertbar. Diese werden als Schüttgüter angeliefert, die Schüttgutdichten von ca. 50 bis 500 kg/m³ aufweisen, wobei Sekundärbrennstoffe aus Tiermehl und Futtermittel auch mit Dichten bis 800 kg/m³ vorkommen. Derartige Sekundärbrennstoffe sind teilweise auch sehr abrasiv und enthalten zum Teil auch harte störende Anteile aus kleinen Stein-, Draht- oder Schraubenresten, die einen hohen Verschleiß an den damit in Berührung kommenden Teilen der Zellenradschleuse zur Folge haben können. Deshalb sind hohe Standzeiten aller Verschleißteile erforderlich, um einen ungestörten und genauen Dosierbetrieb zu ermöglichen.

Die zu dosierenden vorgenannten Sekundärbrennstoffe werden mit Hilfe einer pneumatischen Förderleitung 19 in einen nachfolgenden Brennofen eingeblasen. Um eine optimale Verbrennung und nicht zu große Verbrennungsrückstände zu gewährleisten, wird eine Beladung von 2,5 bis 4 kg Sekundärbrennstoff pro Kilogramm Luft vorgesehen, bei dem sich vorteilhafterweise ein Befüllgrad in den Dosierkammern 5 von 30% erreichen lässt.

Die dargestellte Zellenradschleuse ist für eine Förderstärke von ca. 3 t/h ausgelegt, bei der der Zuführschacht 2 etwa eine Länge von 800 mm und eine Breite von 450 mm aufweist. In dem zylindrischen Gehäuseteil 1 ist unterhalb des Zuführschachtes 2 axial in Förderrichtung ein Zellenrad 4 angeordnet, das zehn radial auskragende Zellenradstege 3 enthält. Die Zellenradstege 3 können in axialer Richtung geradlinig, schräg oder auch leicht schraubenförmig verlaufen. Aus Fig. 2 der Zeichnung ist ersichtlich, dass die Zellenradstege 3 zehn umlaufende Dosierkammern 5 bilden, mit deren Hilfe die Sekundärbrennstoffe von Zuführschacht 2 in die Förderleitung 19 eingegeben werden.

Das Zellenrad 4 enthält eine zentrale Antriebswelle 7, die in zwei Kugellagern 8 an den Gehäusestirnflächen 26 reibungsarm gelagert ist. Um die Antriebswelle 7 des Zellenrades 4 ist noch ein rohförmiger Kern 9 angeordnet, an dem die Zellenradstege 3 befestigt sind und dadurch trapezförmige Dosierkammern 5 bilden. Das Zellenrad 4 ist vorzugweise etwa 800 mm lang und besitzt einen Außendurchmesser von ca. 600 mm. Unterhalb der Antriebswelle 7 und im Rotationsbereich des Zellenrades 4 sind an den beiden Stirnwänden 26 des Gehäuses zwei axial gegenüberliegend angeordnete Öffnungen 10, 11 zum Anschluss der Förderleitung 19 oder eines Gebläses vorgesehen. Dabei ist linksseitig oder gebläseseitig eine Einblasöffnung 10 und rechtsseitig oder ofenseitig eine Ausblasöffnung 11 angeordnet, deren Querschnitt etwa dem Dosierkammerquerschnitt entspricht. Die Einblasöffnung 10 ist mit einem Einblasrohrstutzen 16 verbunden, der an der Gehäusestirnwand 26 trapezförmig und zum Gebläseanschlussrohr 18 rund ausgebildet ist, und zur Befestigung einen Anschlussflansch 27 besitzt. Der Einblasrohrstutzen 16 ist über das Gebläseanschlussrohr 18 mit einem nicht dargestellten Gebläse verbunden, das die pneumatische Fördermittel in die auszublasende Dosierkammer 5 der Zellenradschleuse einbläst.

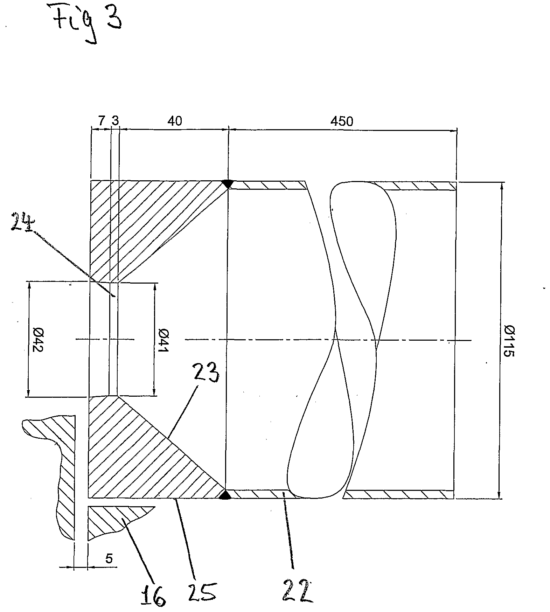

In den Einblasrohrstutzen 16 ist eine Injektordüse 15 integriert, die zwischen dem Befestigungsflansch 27 des Einblasrohrstutzens 16 und dem Gebläseanschlussrohr 18 luftdicht eingeklemmt ist. Die Injektordüse 15 ist mit ihrem einblasseitigen Vorderteil in Fig. 3 der Zeichnung als Schnittbild näher dargestellt. Dabei besteht die Injektordüse 15 im Wesentlichen aus einem zylinderförmigen Rohr 22, das an seiner Luftaustrittsseite eine kegelförmige Verjüngung 23 aufweist, und in ihrem Zentrum eine kreisförmige Düsenöffnung 24 enthält. Bei dem projektierten Ausführungsbeispiel besitzt das Düsenrohr 22 vorzugweise eine lichte Weite von 109 mm und ist koaxial zum Einblasrohrstutzen 16 angeordnet und ragt mit seiner Düsenöffnung 24 vorzugweise bis in die Einblasöffnung 10 hinein. Zur besseren Führung ist um die Düsenöffnung 24 ein zylinderförmiger Führungsrand 25 angeordnet, der an der Innenwandung des Einblasrohrstutzens 16 zumindest teilweise anliegt. Die Düsenöffnung 24 besitzt eine lichte Weite von vorzugweise 41 mm und erweitert sich zum Austrittsrand auf eine lichte Weite von vorzugweise 42 mm, um die Luftverwirbelungen an der Austrittskante zu verringern. Die Einblasöffnung 10 ist vorzugweise trapezförmig ausgebildet, kann aber wegen der Injektordüse 15 auch kleinere runde Öffnungsquerschnitte aufweisen.

Die Ausblasöffnung 11 ist der Einblasöffnung 10 axial gegenüberliegend an der anderen Stirnfläche der Zellenradschleuse angeordnet und vorzugweise auch trapezförmig ausgebildet. Dabei besitzt die Ausblasöffnung 11 einen Querschnitt der dem der Dosierkammern 5 entspricht, damit eine gute Entleerung der rotierenden Dosierkammern 5 gewährleistet ist. Förderleistungsseitig ist an der Ausblasöffnung 11 ebenfalls ein Ausblasrohrstutzen 17 an der Stirnfläche des Gehäuses befestigt, das den Anschluss zur Förderleitung 19 herstellt, durch die die ausgeblasenen Sekundärbrennstoffe zum Ofen befördert werden.

Beim Betrieb der Durchblasschleuse wird diese mit einer Drehzahl von ca. 20 Umdrehungen pro Minute von einem nicht dargestellten Elektrometer angetrieben, durch den die eingebrachten Sekundärbrennstoffe mit der vorgegebenen Förderstärke von 3t/h zur Ausblasöffnung 11 gefördert werden. Dazu wird vorteilhafterweise ein möglichst großer Auslassquerschnitt gewählt, der möglichst dem Querschnitt der Dosierkammer 5 entspricht und an dem ein vorgegebener Gegendruck von ca. 400 mbar nicht überstiegen werden soll. Bei einem höheren Gegendruck wäre die Belastung an den Stegabdichtungen und damit die Leckluftmenge relativ groß, so dass insbesondere die leicht flüchtigen Brennstoffanteile wieder in den Zuführschacht 2 gelangen könnten. Dies würde aber zu einem ungenauen Dosierbetireb führen und den Verschleiß an den Abdichtstellen sowie den Zwischenräumen erhöhen.

Um den Verschleiß gering zu halten, verfügt die Zellenradschleuse über ein spezielles Verschleißkonzept, das die Standzeiten der Verschleißteile auf mindestens ein Jahr erhöht. Deshalb sind die Zellenradstege 3 in ihren Randbereichen als Schneidkanten 12 ausgebildet, die über eine Gegenschneide 13 in dem Zuführschacht 2 ein Eindringen von Sekundärbrennstoffpartikeln in den Spalt zwischen den Gehäuseteilen 1, 26 und Zellenrad 4 verhindert. Dazu ist zusätzlich im Zuführschacht 2 noch ein Vorabstreifer 20 vorgesehen, der die Sekundärbrennstoffe von den Abdichtspalten weg in die Dosierkammern 5 lenkt. Zusätzlich sind die Schneidkanten 12 als separate Schleißkanten ausgebildet, die vorzugweise aus rostfreiem Messerstahl oder anderen abriebfesten Stahllegierungen bestehen und auswechselbar an den Endbereichen der Zellenradstege 3 befestigt sind.

Eine derartige Schleißauskleidung 14 ist auch an den Innenflächen der Gehäusestirnseiten 26 vorgesehen, die auch dort eine Vergrößerung der Spaltbreiten durch abrasive Schüttgutpartikel verhindern sollen. Vorteilhafterweise wird auch die Innenfläche des zylinderförmigen Gehäuseteils 1 mit einer Verschleißbuchse 21 aus Federstahl oder anderen abriebfesten Stahllegierungen ausgekleidet, durch die die Standzeiten zusätzlich erhöht werden. Dabei sind zwischen der Verschleißbuchse 21 und den Schneidkanten 12 der Zellenradstege 3 sowie den Stirnflächen 26 geringe Spaltweiten zur Abdichtung von etwa 0,2 bis 0,5 mm notwendig, um eine Berührung mit dem rotierenden Zellenrad 4 und damit eine hohe Reibung oder Beschädigung an den inneren Gehäusewänden zu vermeiden. Dadurch sind Lecklüftanteile, die in den Zuführschacht gelangen können, im Grunde unvermeidlich, die insbesondere die leicht flüchtigen Sekundärbrennstoffteile durch die Spalte drücken können und derart aufwirbeln, dass eine kontinuierliche Dosierung beeinträchtigt wird. Dies wurde bisher meist durch zusätzliche spezielle Spaltabdichtungen oder eine Leckluftabsaugung verhindert.

Deshalb schlägt die Erfindung für eine verschleißarme Zellenradschleuse eine integrierte Injektordüse 15 vor,deren Düsenöffnung 24 mit der Stirnseite der Einblasöffnung 10 fluchtet. Da die Düsenöffnung 24 eine Querschnittsverringerung bewirkt, entsteht in der Einblasöffnung 10 eine Erhöhung der Luftgeschwindigkeit wie bei einer Erhöhung der Gebläseleistung, die gerade am Dosierkammeranfang für eine rasche Ausräumung sorgt. Durch die Querschnittsverbreiterung innerhalb der Dosierkammer 5 erfolgt aber wiederum in Ausblasrichtung eine kontinuierliche Verringerung der Luftgeschwindigkeit, die bei vorteilhafter Bemessung etwa bei erreichen der Dosierkammerhälfte die ursprüngliche Gebläseluftgeschwindigkeit wieder erreicht. Durch diese Druckunterschiede in der ersten Dosierkammerhälfte entstehen an den Dosierkammerspalten Unterdruckbereiche, die einen Austritt von Leckluft verhindern und gleichzeitig die in der Dosierkammer 5 befindlichen Sekundärbrennstoffe in den Ausblasluftstorm ziehen. Dadurch baut sich erst zum Dosierkammerausgang der vorgegeben Gegendruck auf, so dass erst am Dosierkammerende ein nennenswerter Leckluftanteil wirksam werden kann.

Durch eine derartige Absenkung des Leckluftanteils um bis zu 70% kann überraschenderweise auf eine verschleißbehaftete weiche Abdichtung aus gut dichtenden gummiartigen Werkstoffen verzichtet werden, ohne dass dadurch die Dosiergenauigkeit beeinträchtigt wird. Gleichzeitig ist durch die Verringerung des Leckluftanteils nur eine verhältnismäßig geringe Gebläseleistung erforderlich, obgleich an der Injektordüse 15 ein Druckabfall von 0,2 bis 0,3 bar auftritt. Dadurch wird auch gleichzeitig sichergestellt, dass die Dosierkammer 5 bei einem vorgegebenen Brennstoffanteil von 2 bis 4 kg pro kg Luft zuverlässig und vollständig ausgeblasen wird.

Wegen der geringen Leckluftverluste können auch Sekundärbrennstoffe mit unterschiedlichen Schüttgutgewichten pro Rauminhalt mit der selben Zellenradschleuse dosiert werden, da dies durch die Anpassung der Düsenquerschnitte auf einfache Weise ausgleichbar ist. Deshalb sind auch großvolumige Zellenradschleusen ausführbar, die dann nur vergleichsweise geringe Leckluftmengen verursachen. Zur Dosierung derartiger Sekundärbrennstoffe sind Durchblasschleusen mit Förderstärken von ca 1 bis mindesten 15t/h ausführbar, die mit gleichbleibenden Kammer- und Förderrohrquerschnitten nahezu alle vorkommenden Sekundärbrennstoffe dauerhaft und verschleißarm gut dosiert in pneumatische Förderleistungen 19 einbringen können.

Bei einer weiteren Ausführungsform der Zellenradschleuse ist vorgesehen, die mit den Schneidkanten 12 versehenen Zellenradstege 3 in axialer Richtung schräg oder leicht schraubenförmig auszubilden, so dass bereits bei Überlaufen der Einblasöffnung 10 die Ausblasöffnung 11 noch wirksam zur Ausblasung geöffnet ist. Dadurch wird an der geraden Gegenschneide 13 eine ruckfreie gleichmäßige Abscherung der Sekundärbrennstoffe erreicht. Bei axial geraden Schneidkanten 12 bzw. Zellenradstegen 3 kann auch die Gegenschneide 13 in axialer Richtung schräg angeordnet sein, um eine gleichmäßige ruckfreie Abscherung zu gewährleisten.

Die Erfindung ist weiterhin nicht nur auf die dargestellten Ausführungsbeispiele beschränkt, sondern kann durch konstruktive Ausgestaltungen auch in vergleichbaren Ausführungsformen eingesetzt werden. Dabei ist auch eine Anwendung für Primärbrennstoffe denkbar, die wie die vorgenannten Sekundärbrennstoffe aufbereitet sind, aber nicht aus Müll oder anderen Fertigungsrückständen stammen. Mit einer derartigen zellenradschleuse ist auch eine pneumatische Förderung von vorsortiertem oder aufbereitetem Müll durchführbar, auch wenn dies außerhalb einer thermischen Verwertung vorgesehen ist.

## Patentansprüche

1. Zellenradschleuse,
- die als Durchblasschleuse ausgebildet ist, insbesondere zur Sekundärbrennstoffdosierung,
- die einen Zuführschacht (2) und darunter ein mit radialen Zellenradstegen (3) versehenes horizontal angeordnetes Zellenrad (4) enthält,
- das unterhalb der Zellenradachse im Rotationsbereich der Zellenradstege (3) stirnseitig gegenüberliegend angeordnete Einblas- (10) und Ausblasöffnungen (11) im Gehäuse aufweist,
wobei im Bereich der Einblasöffnung (10) eine Injektordüse (15) integriert ist, die die Förderluft in die durch die Zellenradstege (3) gebildeten Dosierkammern (5) einbläst,
**dadurch gekennzeichnet, dass**
- die Zellenradstege (3) an ihren radialen Endbereichen metallisch harte Spaltabdichtungen (12) aufweisen und
- die Injektordüse (15) in einem an der Einblasöffnung (10) befestigten Einblasrohrstutzen (16) koaxial innenliegend eingesetzt ist und
- im Bereich der Einblasöffnung (10) eine Verrringerung des Einblasquerschnitts gegenüber dem Einblasrohrquerschnitt bewirkt.

2. Zellenradschleuse nach Anspruch 1, **dadurch gekennzeichnet, dass** die Einblasöffnung (10) und die Ausblasöffnung (11) axial gegenüberliegend an den Gehäusestirnflächen (26) angeordnet sind und dass die Querschnittsfläche mindestens der Ausblasöffnung (11) in etwa den Querschnitt der Dosierkammern (5) aufweist.

3. Zellenradschleuse nach einem der vorhergehenden Ansprüche, **dadurch gekennzeichnet, dass** die Injektordüse (15) rohrförmig ausgebildet ist und eine Düsenöffnung (24) aufweist, dessen Durchmesser höchstens dem halben mittleren Dosierkammerdurchmesser entspricht.

4. Zellenradschleuse nach einem der vorhergehenden Ansprüche, **dadurch gekennzeichnet, dass** die Spaltabdichtungen als separate Schneidkanten (12) ausgebildet sind, die aus einem Federstahl oder einer anderen verschleißarmen Stahllegierung bestehen und austauschbar an den Zellenradstegen (3) befestigt sind.

5. Zellenradschleuse nach Anspruch 4, **dadurch gekennzeichnet, dass** im Zuführschacht (2) parallel zu den Schneidkanten (12) eine Gegenschneide (13) vorgesehen ist, an der die Schneidkanten (12) im geringen Abstand in entgegengerichteter Ausrichtung rotierend vorbeibewegt werden.

6. Zellenradschleuse nach einem der vorhergehenden Ansprüche, **dadurch gekennzeichnet, dass** das Gehäuseteil (1) an der zylinderförmigen Innenwand mit einer Verschleißbuchse (21) und an den Stirnseiten mit jeweils einer Schleißauskleidung (14) versehen ist, die aus einem Federstahlmaterial oder einer verschleißarmen Stahllegierung bestehen.

7. Zellenradschleuse nach einem der Ansprüche 4 bis 6, **dadurch gekennzeichnet, dass** die Zellenradstege (3) mit den Schneidkanten (12) in axialer Richtung schräg verlaufend oder leicht schraubenförmig am Zellenradkern (9) befestigt sind.

8. Zellenradschleuse nach einem der Ansprüche 5 bis 7, **dadurch gekennzeichnet, dass** die Gegenschneide (13) schräg zur axialen Richtung der geraden Zellenstege (3) angeordnet ist.

## Claims

1. Rotary valve,
- which is designed as a blow-through feeder, in particular for secondary fuel dosing,
- which contains a feed chute (2) and underneath, a cellular wheel (4) that is horizontally arranged and provided with radial cellular wheel webs (3),
- which comprises blow-in openings (10) and blow-out openings (11) in the housing that are disposed underneath the cellular wheel axle in the rotational range of the cellular wheel webs (3) at the end face on the opposite side,
wherein in the area of the blow-in opening (10), an injector nozzle (15) is integrated that blows the conveyor air into the dosing chambers (5) formed by the cellular wheel webs (3),
**characterized in that**
- the cellular wheel webs (3) comprise metallically hard gap seals (12) at their radial end regions and
- the injector nozzle (15) is inserted coaxially internally in a blow-in pipe socket (16) at the blow-in opening (10) and
effects a reduction of the blow-in cross section relative to the blow-in pipe cross section in the area of the blow-in opening (10).

2. Rotary valve according to claim 1, **characterized in that** the blow-in opening (10) and the blow-out opening (11) are arranged axially opposite on the housing end faces (26) and that the cross-sectional area of at least the blow-out opening (11) substantially includes the cross section of the dosing chambers (5).

3. Rotary valve according to any one of the previous claims, **characterized in that** the injector nozzle (15) is tubular and has a nozzle opening (24) of which the diameter corresponds to at most half of the mean diameter of the dosing chamber.

4. Rotary valve according to any one of the previous claims, **characterized in that** the gap seals are designed as separate cutting edges (12), which consist of a spring steel or another low wear steel alloy and are interchangeably mounted on the cellular wheel webs (3).

5. Rotary valve according to claim 4, **characterized in that** a counter blade (13) is provided in the feed chute (2) parallel to the cutting edges (12) past which the cutting edges (12) are rotationally moved marginally spaced therefrom in the opposite direction.

6. Rotary valve according to any one of the previous claims, **characterized in that** on its cylindrical inner wall, the housing part (1) is provided with a wear bushing (21), and at its end faces, with in each case a wear lining (14), which consists of a spring steel material or a low wear steel alloy.

7. Rotary valve according to one of claims 4 to 6, **characterized in that** the cellular wheel webs (3) are attached to the cellular wheel core (9) with the cutting edges (12) extending at an angle in the axial direction or slightly helically.

8. Rotary valve according to one of claims 5 to 7, **characterized in that** the counter blade (13) is arranged at an angle to the axial direction of the straight cell webs (3).

## Revendications

1. Vanne rotative
- qui est conçue comme une écluse de soufflage, plus particulièrement pour le dosage de carburant secondaire,
- qui comprend un compartiment d'introduction (2) et une roue alvéolaire (4) disposée horizontalement en dessous, munie de nervures radiales (3),
- qui comprend, en dessous de l'axe de la roue alvéolaire, dans la zone de rotation des nervures (3), des ouvertures de soufflage d'entrée (10) et des ouvertures de soufflage de sortie (11), disposées frontalement de manière opposée dans le boîtier,
une buse d'injection (15) étant intégrée au niveau de l'ouverture de soufflage d'entrée (10), qui souffle l'air de convoyage vers les chambres de dosage (5) formées à travers les nervures (3) de la roue alvéolaire,
**caractérisée en ce que**
- les nervures (3) de la roue alvéolaire comprennent, au niveau de leurs extrémités radiales, des joints d'étanchéité (12) métalliques durs et
- la buse d'injection (15) est insérée, de manière coaxiale interne dans un piquage tubulaire de soufflage d'entrée (16) fixé à l'ouverture de soufflage d'entrée (10) et provoque, au niveau de l'ouverture de soufflage d'entrée (10), une réduction de la section de soufflage d'entrée par rapport à la section du tube de soufflage d'entrée.

2. Vanne rotative selon la revendication 1, **caractérisée en ce que** l'ouverture de soufflage d'entrée (10) et l'ouverture de soufflage de sortie (11) sont disposées axialement de manière opposée au niveau des faces frontales (26) du boîtier et **en ce que** la surface de section au moins de l'ouverture de soufflage de sortie (11) comprend approximativement la section des chambres de dosage (5).

3. Vanne rotative selon l'une des revendications précédentes, **caractérisée en ce que** la buse d'injection (15) présente une forme tubulaire et comprend une ouverture de buse (24) dont le diamètre correspond au maximum à la moitié du diamètre moyen de la chambre de dosage,

4. Vanne rotative selon l'une des revendications précédentes, **caractérisée en ce que** les joints d'étanchéité sont conçus comme des arêtes de coupe séparées (12), qui sont constituées d'un acier ressort ou d'un autre alliage d'acier résistant à l'usure et sont fixées de manière interchangeable aux nervures (3) de la roue alvéolaire.

5. Vanne rotative selon la revendication 4, **caractérisée en ce que**, dans le compartiment d'introduction (2), parallèlement aux arêtes de coupe (12), est prévu un tranchant opposé (13) devant lequel les arêtes de coupe (12) sont déplacées à une faible de distance avec une rotation dans le sens opposé.

6. Vanne rotative selon l'une des revendications précédentes, **caractérisée en ce que** la partie de boîtier (1) est munie, au niveau de la paroi interne cylindrique, d'une douille d'usure (21) et, au niveau des faces frontales, d'un revêtement d'usure (14), qui sont constitués d'un matériau de type acier ressort ou d'un alliage d'acier résistant à l'usure.

7. Vanne rotative selon l'une des revendications 4 à 6, **caractérisée en ce que** les nervures (3) de la roue alvéolaire sont fixées de façon à s'étendre de manière oblique avec les arêtes de coupe (12) dans la direction axiale ou bien de manière légèrement hélicoïdale au noyau (9) de la roue alvéolaire.

8. Vanne rotative selon l'une des revendications 5 à 7, **caractérisée en ce que** le tranchant opposé (13) est disposé en oblique par rapport à la direction axiale des nervures droites (3) de la roue alvéolaire.
